## Europäisches Patentamt

## European Patent Office

## Office européen des brevets

(19)

(11) Veröffentlichungsnummer: **0 199 709 B1**

(12)

# EUROPÄISCHE PATENTSCHRIFT

(45) Veröffentlichungstag der Patentschrift:
26.09.90

(51) Int. Cl.⁵: **B01D 19/02, B01D 11/04**

(21) Anmeldenummer: 86890098.6

(22) Anmeldetag: 09.04.86

(54) Einrichtung zum Fördern von Flüssigkeiten sowie Verwendung derselben zum Trennen von flüssigen Phasen.

(30) Priorität: 09.04.85 AT 1065/85

(43) Veröffentlichungstag der Anmeldung:
29.10.86 Patentblatt 86/44

(45) Bekanntmachung des Hinweises auf die Patenterteilung:
26.09.90 Patentblatt 90/39

(84) Benannte Vertragsstaaten:
BE CH DE FR GB IT LI LU NL SE

(56) Entgegenhaltungen:
DE-A- 1 807 525
DE-C- 606 995
DE-C- 727 091
FR-A- 1 064 690
FR-A- 2 103 240

(73) Patentinhaber: VOEST-ALPINE Aktiengesellschaft,
Friedrichstrasse 4, A-1011 Wien(AT)

(72) Erfinder: Cvitas, Vilim, Dipl.-Ing., Voltastrasse 29,
A-4040 Linz(AT)
Erfinder: Faltejsek, Karl, Dipl.-Ing.,
Lüfteneggerstrasse 6, A-4020 Linz(AT)
Erfinder: Klinar, Gottfried, Alpenstrasse 33,
A-8707 Leoben(AT)
Erfinder: Hanke, Reinhart, Dipl.-Ing., Annaberggasse 2,
A-8700 Leoben(AT)

(74) Vertreter: Haffner, Thomas M., Dr. et al,
Patentanwaltskanzlei Dipl.-Ing. Adolf Kretschmer Dr.
Thomas M. Haffner Schottengasse 3a, A-1014 Wien(AT)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Beschreibung

Die Erfindung bezieht sich auf eine Einrichtung zum Fördern von Flüssigkeiten, insbesondere von in biologischer Umsetzung befindlichen Substraten.

Aus der DE-A-1 807 525 ist ein kontinuierlich arbeitender Mischer für feste Materialien und halbflüssige Suspensionen bekanntgeworden, bei welchem in einem langgestreckten Gehäuse an die Innenwand desselben angrenzende geneigte Ablenkplatten vorgesehen sind, welche jeweils eine Durchtrittsöffnung zwischen von den Ablenkplatten gebildeten benachbarten Abteilen zum Mischen des an einer Seite zugeführten Produktes aufweisen. Durch Drehung des Gehäuses soll in den einzelnen Mischabteilen ein Umwälzen und gutes Vermischen bei gleichzeitigem Transport des Mischgutes zu einer an der der die Zuführungsöffnung aufweisenden Seite gegenüberliegenden Seite vorgesehenen Auslaßöffnung erfolgen.

Zum Fördern von Flüssigkeiten sind weiters bereits Schneckenförderer bekannt, bei welchen eine um eine Achse rotierbar gelagerte Schnecke innerhalb eines Rohres angeordnet ist, wobei die Schnecke zumindest teilweise in die Flüssigkeit eintaucht. Die Herstellung derartiger Schnecken ist relativ aufwendig und es ist in der Regel nicht möglich, mit derartigen Schneckenpumpen stark schäumende flüssige Phasen zu transportieren.

Die Erfindung zielt nun darauf ab, eine Einrichtung der eingangs genannten Art vorzuschlagen, welche neben der Möglichkeit, auch stark schäumende Flüssigkeiten zu transportieren, auch die Möglichkeit bietet, die Ausgestaltung so zu wählen, daß der Schaum bzw. ein Flotat von einer flüssigen Phase getrennt transportiert und mit Vorteil gesondert ausgebracht werden kann. Vor allen Dingen beim Transport von in biologischer Umsetzung befindlichen Substraten soll der Transport hiebei im wesentlichen druckfrei erfolgen, um die Biomasse nicht zu zerstören. Schneckenpumpen lassen in der Regel eine mehr oder minder hohe Druckdifferenz entstehen, welche für den Transport empfindlicher Biomasse nachteilig ist.

Zur Lösung dieser Aufgabe besteht die Erfindung im wesentlichen aus einer Einrichtung zum Fördern von Flüssigkeiten, insbesondere von in biologischer Umsetzung befindlichen Substraten, bei welcher um eine zur Oberfläche der Flüssigkeit parallele oder schräggestellte Achse Scheiben quer zur Drehachse in einem koaxialen Rohr gemeinsam mit diesem oder gesondert von diesem drehbar angeordnet sind, deren Oberflächen in wenigstens einem die Achse enthaltenden Schnitt mit der Achse abwechselnd einen Winkel größer oder kleiner als 90° einschließen, wobei die Scheiben an ihrem Umfang dichtend an das Rohr anschließen und wenigstens eine Durchbrechung für den Durchtritt von Flüssigkeit in jeder Scheibe vorgesehen ist, welche an einer in Achsrichtung nachfolgenden Scheibe relativ zur vorangehenden Scheibe in Umfangsrichtung versetzt angeordnet ist, wobei jede Scheibe zusätzlich zu der (den) nahe dem Umfang der Scheiben angeordneten Durchbrechung(en) nahe der Achse liegende Durchbrechungen an der relativ zur Drehachse gegenüberliegenden Seite derselben trägt. Dadurch, daß ein im wesentlichen horizontal bzw. leicht schräg angeordnetes Rohr vorgesehen ist, in welchem oder gemeinsam mit welchem um eine zur Oberfläche der Flüssigkeit parallele oder. leicht schräge Achse drehbar Scheiben angeordnet sind, deren Oberflächen in wenigstens die Achse enthaltenden Schnitt mit der Achse abwechselnd einen Winkel größer oder kleiner als 90° einschließen, ergibt sich bei jeder Umdrehung der Scheiben in den durch diese Scheiben begrenzten Kammern abwechselnd ein größeres Volumen oder kleineres Volumen und damit abwechselnd ein ansteigender oder abfallender Flüssigkeitsspiegel. Derartige drehbare Scheiben, welche in wenigstens einem Axialschnitt abwechselnd gegensinnig zueinander geneigt sind, ergeben an sich keine Pumpwirkung in Achsrichtung des Rohres.

Vielmehr beschränkt sich die Wirkung derartiger Scheiben zunächst auf ein abwechselndes Ansteigen und Absinken des Flüssigkeitsspiegels in dem zwischen den Scheiben liegenden Raum. Wenn die Scheiben in Abstand von der Innenwand des Rohres umlaufen, wird sich dieser Niveauunterschied benachbarter Kammern relativ rasch über den verbleibenden Ringquerschnitt über die Länge des Rohres ausgleichen und es wird zu einem abwechselnden pulsierenden Bewegen der Flüssigkeit in beide Achsrichtungen, nicht aber zu einer gezielten Transportrichtung kommen. Dadurch, daß nun die Scheiben an ihrem Umfang dichtend an das Rohr anschließen und daß wenigstens eine Durchbrechung für den Durchtritt von Flüssigkeit in jeder Scheibe vorgesehen ist, welche an an einer in Achsrichtung nachfolgenden Scheibe relativ zur vorangehenden Scheibe in Umfangsrichtung versetzt angeordnet ist, ergibt sich nun der Effekt, daß beim Eintauchen derartiger Scheiben in den Flüssigkeitsspiegel ein Transport immer nur in der Richtung möglich ist, welche durch die eintauchende Ausnehmung bzw. Durchbrechung der Scheibe freigegeben wird, wobei der Transport ausschließlich durch die relativ geringe Druckdifferenz auf Grund des hydrostatischen Druckes vom höheren Flüssigkeitsniveau zum tieferen Flüssigkeitsniveau erfolgt. Es wird somit ein nahezu druckloser Transport sichergestellt und es kann die zu transportierende Flüssigkeit an einem Ende des Rohres aufgegeben und am anderen Ende desselben abgezogen werden. Um gleichzeitig Phasen unterschiedlicher Dichte, wie beispielsweise Schaum oder Flotat und eine flüssige Phase, in verschiedene Richtungen transportieren zu können, ist die Ausbildung darüberhinaus so getroffen, daß jede Scheibe zusätzlich zu der (den) nahe dem Umfang der Scheiben angeordneten Durchbrechung(en) nahe der Achse liegende Durchbrechungen an der relativ zur Drehachse gegenüberliegenden Seite derselben trägt. Dadurch wird dann, wenn die achsnahen Durchbrechungen in den Flüssigkeitsspiegel eintauchen, der Transport in eine Richtung freigegeben, wobei er wiederum von der Kammer mit dem höheren Flüssigkeitsspiegel zur Kammer mit dem niedrigeren Flüssigkeitsspiegel erfolgt, wohingegen beim Eintauchen der Durchbrechungen nahe dem Umfang der Scheiben der Transport in die entgegengesetzte Richtung wiederum von einer Kammer mit höherem Flüssigkeitsspiegel in eine Kammer mit niedrigerem Flüssigkeitsspiegel erfolgt.

Mit Vorteil ist die Ausbildung hiebei so getroffen, daß die Durchbrechungen in Achsrichtung benachbarter Scheiben in axialer Projektion an gegenüberliegenden Seiten der Scheibe liegen. Auf diese Weise wird bei einer Umdrehung der Scheiben um 180° jeweils der Transport in eine Richtung freigegeben, wohingegen der restliche Teil der Umdrehung im wesentlichen für die Veränderung der Höhe des Flüssigkeitsspiegels in benachbarten Kammern ausgenutzt werden kann.

In konstruktiv besonders einfacher Form weisen die Scheiben im wesentlichen elliptische Grundformen auf, wobei die Durchbrechungen symmetrisch zur Hauptachse derselben vorzugsweise in der Hauptachse derselben liegen.

Um jeweils die maximale Höhendifferenz in benachbarten Kammern für den gerichteten Transport ausnützen zu können, ist die Anordnung der Durchbrechungen im wesentlichen so getroffen, daß die Durchbrechungen benachbarter Scheiben in der Axialprojektion zentrisch symmetrisch angeordnet sind. Es taucht somit eine achsnahe Durchbrechung jeweils nach einer Umdrehung um einen Winkel von 180° in den oben liegenden Bereich des Flüssigkeitsspiegels ein, wohingegen die achsferne, dem Umfang nahe Durchbrechung nach einer weiteren Umdrehung um 180° zur Wirkung gelangt.

Bezüglich der nahe dem Umfang angeordneten Durchbrechung bestehen keine geometrischen Probleme, diese hinreichend groß auszubilden, und diese Durchbrechung kann in einfacher Weise als von der Ellipse abgetrenntes Segment ausgebildet sein. Die achs- nahe Durchbrechung stellt aber in der Regel einen mehr oder minder großen Drosselquerschnitt dar, und um die Zeitdauer, über welche das freie Überströmen von einer Kammer in die benachbarte Kammer im achsnahen Bereich ermöglicht wird, zu erhöhen, ist mit Vorteil die Ausbildung so getroffen, daß die nahe der Achse angeordneten Durchbrechungen als Langlöcher ausgebildet sind. Die achsnahe Durchbrechung kann hiebei als sich in Richtung der Hauptachse der elliptischen Scheiben erstreckendes Langloch ausgebildet sein, wobei der Übertritt in die benachbarte Kammer nur über einen kurzen Zeitbereich zugelassen wird. Wenn die Durchbrechung als in Drehrichtung gekrümmt verlaufendes Langloch ausgebildet ist, wird die Überströmzeit entsprechend verlängert. Die Ausbildung der nahe an dem Umfang der Scheibe angeordneten Durchbrechungen kann in herstellungstechnisch besonders einfacher Weise als zur Hauptachse der Ellipse symmetrische Segmente ausgebildet sein.

Um eine exaktere Phasentrennung zu erreichen, kann mit Vorteil die Ausbildung so getroffen werden, daß das Überströmen nur am tiefsten Punkt des rohrförmigen Behälters ermöglicht wird. Zu diesem Zweck ist mit Vorteil im Rohr eine ortsfeste ringscheibenartige Dichtung angeordnet, deren Breite in radialer Richtung größer ist als die entsprechende Breite der Ausnehmung am Umfang der rotierenden Scheiben, wobei die ringscheibenartige Dichtung wenigstens eine Durchbrechung aufweist, welche bei rotierenden Scheiben zyklisch mit der achsfernen Ausnehmung der Scheiben fluchtet. Die Scheibe schleift hiebei mit dem die achsferne Durchbrechung aufweisenden Bereich auf Grund ihrer Taumelbewegung längs der Dichtung, wobei in Seitenansicht gesehen dieser Teil der Scheibe während der Umdrehung der Scheiben in einer Querschnittsebene des Rohres verbleibt, in welcher die Dichtung anzuordnen ist.

Um einen dichten Abschluß der Scheiben in den übrigen Bereichen an das Rohr sicherzustellen, können in Umfangsrichtung verlaufende Dichtelemente vorgesehen sein oder aber die Scheiben über ihren Umfang starr mit dem Rohr verbunden sein, wobei dann das Rohr drehbar gelagert und antreibbar ist. Eine derartige Ausbildung weist gegenüber einer gleichfalls denkbaren Ausbildung mit drehbaren Scheiben und starrem Rohr den Vorteil auf, daß zwischen benachbarten Kammern in denjenigen Drehlagen, in welchen die an der Peripherie der Scheibe angeordnete Durchbrechung nicht in den Flüssigkeitsspiegel eintaucht, ohne Dichtungselemente kein Drosselquerschnitt verbleibt, welcher zu einer periodischen Strömungsrichtungsumkehr führen würde. Umgekehrt kann ein derartiger verbleibender Drosselquerschnitt bei angetriebenen Scheiben ein gewisses Maß an Turbulenz sicherstellen, welches für die Ausbildung von aufschwimmendem Flotat vorteilhaft sein kann.

In einfacher Weise sind an den beiden Stirnseiten des Rohres Zu- und Abflußöffnungen nahe dem Innenmantel des Rohres vorgesehen. Bei Anordnung von zwei einander bezüglich der Drehachse gegenüberliegenden Durchbrechungen in jeder Scheibe, welche in unterschiedlichem Abstand von der Drehachse angeordnet sind, wird hiebei an einer Stirnseite des Rohres die Phase mit der jeweils geringeren Dichte und an der anderen Stirnseite des Rohres die Phase mit der höheren Dichte angereichert und kann gesondert ausgebracht werden. Je nach Ausmaß der Schaumbildung kann es vorteilhaft sein, die Transportvorgänge unter Anwendung von Gasdruck oder Unterdruck vorzunehmen. Weiters kann es im Falle von biologischen Umsetzungen vorteilhaft sein, bestimmte Bedingungen für die Gaszusammensetzungen einzuhalten. In allen diesen Fällen ist mit Vorteil das Rohr gasdicht und vorzugsweise druckfest verschließbar ausgebildet.

Um einen gerichteten Transport zweier verschiedener Phasen in entgegengesetzte Richtungen zu ermöglichen, ist der Füllstand mit Vorteil auf 50 % des lichten Querschnittes des Rohres begrenzt. Die Rotationsachse verläuft hiebei mit Vorteil parallel zu der und nahe der Oberfläche des jeweils höchsten Standes des Flüssigkeitsspiegels im Rohr.

Die erfindungsgemäße Einrichtung ist mit Vorteil verwendbar um Schaum oder flotierenden Schlamm von einer flüssigen Phase zu trennen. Allgemein lassen sich Phasen unterschiedlicher Dichte dekantieren bzw. in voneinander gesonderte Richtungen abtransportieren.

Die Erfindung wird nachfolgend anhand von in der Zeichnung dargestellten Ausführungsbeispielen näher erläutert.

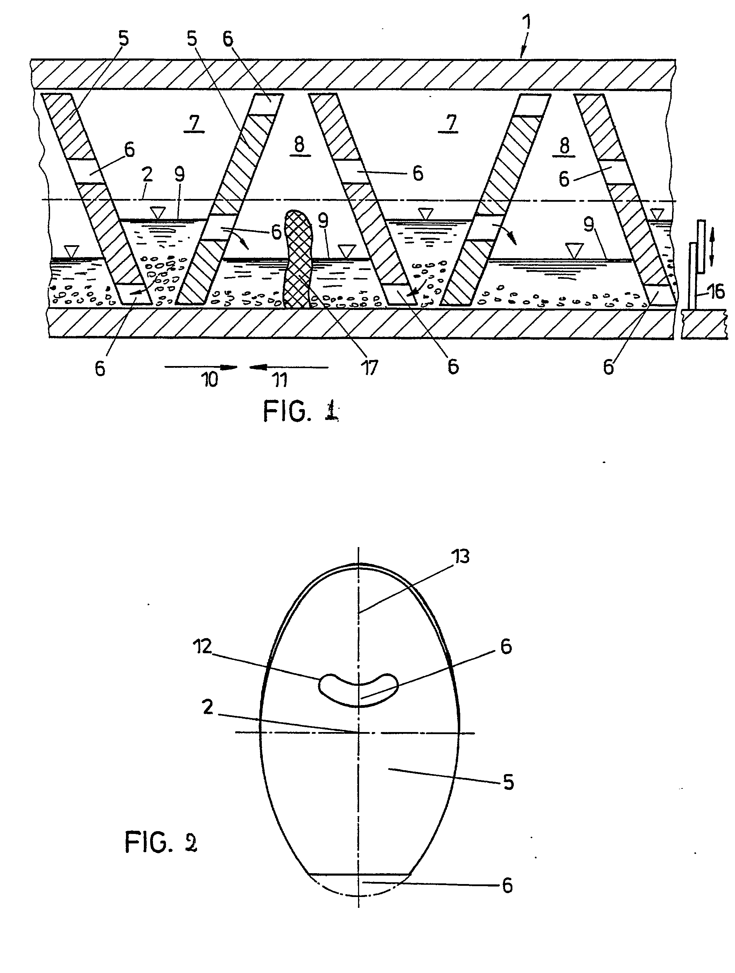

In dieser zeigen Fig.1 eine abgewandelte Ausführungsform im Axialschnitt; Fig.2 eine Draufsicht auf eine Scheibe der Vorrichtung nach Fig.1; und die Fig. 3 und 4 schematisch eine Darstellung eines Details eines rohrförmigen Behälters mit einer Dichtung.

Bei der Ausbildung nach Fig.1 weist jede Scheibe 5 relativ zur gemeinsamen Drehachse 2 jeweils zwei Durchbrechungen 6 an bezüglich der Achse 2 gegenüberliegenden Seiten der Scheibe 5 auf. Die beiden Durchbrechungen 6 einer Scheibe sind somit bezüglich ihrer Wirksamkeit um 180° einer Umdrehung um die Achse 2 entgegengesetzt angeordnet und das Eintauchen der achsnahen Durchbrechungen 6 führt zu einem Überströmen des Mediums zwischen einer Kammer 7 und einer Kammer 8 im Sinne des Pfeiles 10, wohingegen das Eintauchen der achsfernen Durchbrechungen 6 eine entgegengesetzte Strömungsrichtung in Richtung des Pfeiles 11 zur Folge hat. Die Scheiben können wiederum mit dem Rohr 1 fest verbunden sein, sie können jedoch auch auf einer gemeinsamen Drehachse festgelegt sein, wobei dann an der Peripherie ein die Drehbarkeit sicherstellender Mindestabstand verbleibt, was zu einem gewissenen Maß an alternierender Strömungsrichtung zwischen benachbarten Kammern 7 und 8 Anlaß gibt. Sofern der Drosselquerschnitt hinreichend klein ist, kommt es aber dennoch zu einer nennenswerten Anhebung des Flüssigkeitsspiegels und damit zu einem gerichteten Transport zweier Phasen in entgegengesetzte Richtungen. Die spezifisch leichtere Phase, wie beispielsweise flotierender Schlamm oder Schaum, wird aufgrund der achsnahen Durchbrechungen 6 in Richtung des Pfeiles 10 transportiert, wohingegen die spezifisch schwerere Phase nahe dem Mantel des Rohres im Sinne des Pfeiles 11 in die entgegengesetzte Richtung transportiert wird. Die beiden Stirnenden des Rohres 1 können hiebei dicht abgeschlossen sein und nicht dargestellte Zulauf- und Ablauföffnungen aufweisen. Der Ablauf für die spezifisch schwerere Phase wird hiebei in der Darstellung nach Fig.1 am linken Ende des Rohres und der Ablauf für die spezifisch leichtere Phase, insbesondere Schaum oder flotierenden Schlamm, an der rechten Seite der Darstellung nach Fig.2 vorgesehen.

Die einzelnen Scheiben, wie sie bei der Ausbildung nach Fig.1 zum Einsatz gelangen, weisen die in Fig.2 dargestellte Form auf. Es handelt sich hiebei im wesentlichen um elliptische Scheiben, wobei die achsferne Durchbrechung 6 als abgetrenntes Segment und die achsnahe Durchbrechung 6 als Bohrung ausgebildet ist. Die achsnahe Durchbrechung 6 kann ohne weiteres auch als Langloch 12 ausgeführt sein, wie dies in Fig.2 angedeutet ist. In jedem Falle sind die einander bezüglich der Achse 2 gegenüberliegenden Durchbrechungen 6 der gleichen Scheibe mit Vorteil symmetrisch zur Hauptachse 13 der elliptischen Scheibe 5 angeordnet.

Mit einer derartigen Einrichtung läßt sich in einfacher Weise eine Flüssig-flüssig-Extraktion, beispielsweise ein Entsalzen von Ölen, durchführen, wobei den Ölen, beispielsweise Heizölen, Deionat, d.h. entionisiertes Wasser, Wasser oder enthärtetes Wasser, zugesetzt wird und das mit Salzen angereichterte Wasser an einer von Öl gesonderten Stelle abgezogen wird.

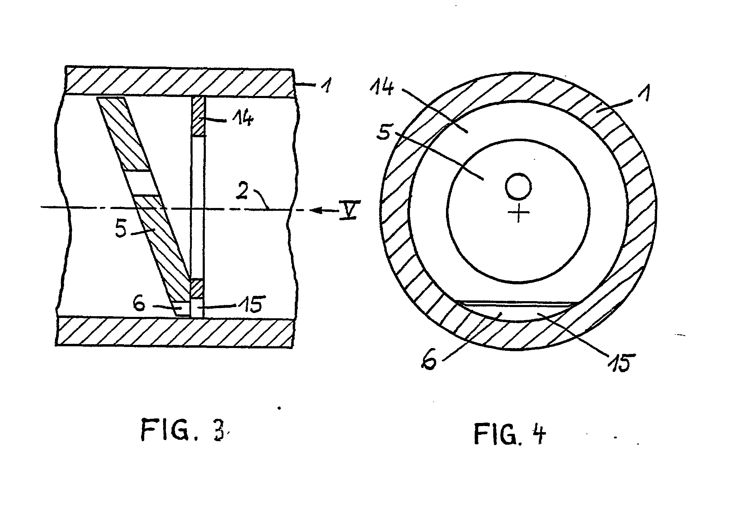

In den Fig. 3 und 4 ist im Axialschnitt bzw. in Stirnansicht gemäß dem Pfeil V in Fig. 3 eine weitere Ausgestaltung der Einrichtung dargestellt, die es ermöglicht, eine exaktere Phasentrennung zu erreichen, in dem das Überströmen nur am tiefsten Punkt des rohrförmigen Behälters erfolgt. Zu diesem Zweck ist im Rohr 1 eine ortsfeste ringscheibenartige Dichtung 14 angeordnet, deren Breite in radialer Richtung größer ist als die entsprechende Breite der Durchbrechung 6 am Umfang der rotierenden Scheibe 5. Die ringscheibenartige Dichtung 14 besitzt bei der tiefsten Stelle im Rohr 1 eine Ausnehmung 15, welche bei rotierender Scheibe 5 zyklisch mit der achsfernen Durchbrechung 6 der Scheibe 5 fluchtet. Die Scheibe 5 schleift hiebei mit dem die achsferne Durchbrechung 6 aufweisenden Bereich auf Grund ihrer Taumelbewe- gung längs der Dichtung 14, wobei dieser Teil der Scheibe 5 während der Umdrehung der Scheibe 5 in einer Querschnittsebene des Rohres 1 verbleibt, in welcher die Dichtung 14 anzuordnen ist. In Fig. 1 ist zur Erzielung einer konstanten Füllhöhe ein höhenverstellbares Wehr schematisch mit 16 angedeutet. Weiters sind mit 17 als Gestrickpakete ausgebildete Einbauten zur Förderung der Koagulation angedeutet.

## Patentansprüche

1. Einrichtung zum Fördern von Flüssigkeiten, insbesondere von in biologischer Umsetzung befindlichen Substraten, bei welcher um eine zur Oberfläche (9) der Flüssigkeit parallele oder schräggestellte Achse (2) Scheiben (5) quer zur Drehachse in einem koaxialen im wesentlichen horizontal angeordneten Rohr (1) gemeinsam mit diesem oder gesondert von diesem drehbar angeordnet sind, deren Oberflächen in wenigstens einem die Achse (2) enthaltenden Schnitt mit der Achse (2) abwechselnd einen Winkel größer oder kleiner als 90° einschließen, wobei die Scheiben (5) an ihrem Umfang dichtend an das Rohr (1) anschließen und wenigstens eine nahe dem Umfang angeordnete Durchbrechung (6) für den Durchtritt von Flüssigkeit in jeder Scheibe (5) vorgesehen ist, welche an einer in Achsrichtung nachfolgenden Scheibe relativ zur vorangehenden Scheibe (5) zusätzlich zu der (den) nahe dem Umfang der Scheiben angeordneten Durchbrechung(en) (6) nahe der Achse liegenden Durchbrechungen (6, 12) an der relativ zur Drehachse gegenüberliegenden Seite derselben trägt.

2. Einrichtung nach Anspruch 1, dadurch gekennzeichnet, daß die Durchbrechungen (6, 12) in Achsrichtung benachbarter Scheiben (5) in axialer Projektion an gegenüberliegenden Seiten der Scheiben liegen.

3. Einrichtung nach Anspruch 1 oder 2, dadurch gekennzeichnet, daß die Scheiben (5) im wesentlichen elliptische Grundform aufweisen und die Durchbrechungen (6, 12) symmetisch zur Hauptachse derselben, vorzugsweise in der Hauptachse derselben liegen.

4. Einrichtung nach Anspruch 1, 2 oder 3, dadurch gekennzeichnet, daß die Durchbrechungen (6) benachbarter Scheiben (5) in der Axialprojektion zentrisch symmetrisch angeordnet sind.

5. Einrichtung nach einem der Ansprüche 1 bis 4, dadurch gekennzeichnet, daß die nahe der Achse angeordneten Durchbrechungen als Langlöcher (12) ausgebildet sind.

6. Einrichtung nach einem der Ansprüche 1 bis 5, dadurch gekennzeichnet, daß die nahe dem Umfang der Scheiben angeordneten Durchbrechungen (6) als zur Hauptachse der Ellipse symmetrische Segmente ausgebildet sind.

7. Einrichtung nach einem der Ansprüche 1 bis 6, dadurch gekennzeichnet, daß im Rohr (1) eine ortsfeste ringscheibenartige Dichtung (14) angeordnet ist, deren Breite in radialer Richtung größer ist als die entsprechende Breite der Ausnehmung (6) am Umfang der rotierenden Scheiben (5) und daß die ringscheibenartige Dichtung (14) wenigstens eine Durchbrechung (15) aufweist, welche bei rotierenden Scheiben zyklisch mit der Ausnehmung (6) am Umfang der Scheiben fluchtet.

8. Einrichtung nach einem der Ansprüche 1 bis 6, dadurch gekennzeichnet, daß die Scheiben (5) über ihren Umfang starr mit dem Rohr (1) verbunden sind und das Rohr (1) drehbar gelagert und antreibbar ist.

9. Einrichtung nach einem der Ansprüche 1 bis 8, dadurch gekennzeichnet, daß an beiden Stirnseiten des Rohres (1) Zu- und Abflußöffnungen nahe dem Innenmantel des Rohres vorgesehen sind.

10. Einrichtung nach einem der Ansprüche 1 bis 9, dadurch gekennzeichnet, daß das Rohr (1) gasdicht und vorzugsweise druckfest verschließbar ausgebildet ist.

11. Einrichtung nach einem der Ansprüche 1 bis 10, dadurch gekennzeichnet, daß der Füllstand des Rohres (1) mit 50% des lichten Querschnittes desselben begrenzt ist.

12. Einrichtung nach einem der Ansprüche 1 bis 11, dadurch gekennzeichnet, daß zwischen Scheiben (5), Einbauten od.dgl. zur Förderung der Koagulation bzw. Vergrößerung der Kontakflächen der zu trennenden Phasen vorgesehen sind.

13. Verwendung einer Einrichtung nach einem der Ansprüche 1 bis 12 zum Trennen von Schaum oder flotierendem Schlamm von einer flüssigen Phase.

14. Verwendung einer Einrichtung nach einem der Ansprüche 1 bis 12 zum Dekantieren bzw. Trennen von flüssigen Phasen bzw. Suspensionen unterschiedlicher Dichte, insbesondere für die Flüssig-flüssig-Extraktion.

**Claims**

1. Device for conveying liquids, in particular substrates undergoing a biological conversion, in which, about an axis (2) which is parallel or inclined relative to the surface (9) of the liquid, plates (5) are arranged rotatably, transverse to the axis of rotation, in a coaxial, essentially horizontally arranged tube (1) integral with the latter or separate from it, and their surfaces, in at least one cross-section containing the axis (2), alternately enclose an angle greater than or less than 90°, the plates (5) adjoining the tube (1) tightly at their circumference and at least one opening (6), arranged close to the circumference, being provided in each plate (5) for the passage of liquid and which is arranged on a plate following in the axial direction offset relative to the previous plate in the circumferential direction, each plate (5), in addition to the opening or openings (6) arranged close to the circumference of the plates, carrying openings (6, 12) lying close to the axis and on the opposite side of said plates relative to the axis of rotation.

2. Device according to Claim 1, characterized in that the openings (6, 12) of plates (5) adjacent in the axial direction lie, in axial projection, on opposite sides of the plates.

3. Device according to Claim 1 or 2, characterized in that the plates (5) have an essentially elliptical basic shape and the openings (6, 12) lie symmetrically about the principal axis of said plates, preferably in their principal axis.

4. Device according to Claim 1, 2 or 3, characterized in that the openings (6) of adjacent plates (5) are arranged centrally symmetrically in axial projection.

5. Device according to one of Claims 1 to 4, characterized in that the openings arranged close to the axis are designed as elongated holes (12).

6. Device according to one of Claims 1 to 5, characterized in that the openings (6) arranged close to the circumference of the plates are designed as segments symmetrical about the principal axis of the ellipse.

7. Device according to one of Claims 1 to 6, characterized in that an annular washer-like seal (14) fixed in location is arranged in the tube (1) and its width in the radial direction is greater than the corresponding width of the recess (6) at the circumference of the rotating plates (5), and in that the annular washer-like seal (14) has at least one opening (15) which, when the plates are rotating, is aligned periodically with the recess (6) at the circumference of the plates.

8. Device according to one of Claims 1 to 6, characterized in that the plates (5) are rigidly connected via their circumference to the tube (1), and the tube (1) is mounted rotatably and can be driven.

9. Device according to one of Claims 1 to 8, characterized in that inflow and outflow orifices are provided on both end sides of the tube (1) close to the inside casing of the tube.

10. Device according to one of Claims 1 to 9, characterized in that the tube (1) is designed so as to be gastight and preferably so as to be sealable in a pressureresistant manner.

11. Device according to one of Claims 1 to 10, characterized in that the fill level of the tube (1) is limited to 50% of its clear cross-section.

12. Device according to one of Claims 1 to 11, characterized in that inserts or the like are provided between plates (5) to promote coagullation and to increase the contact surface areas for the phases to be separated.

13. Use of a device according to one of Claims 1 to 12 for separating foam or floating slurry from a liquid phase.

14. Use of a device according to one of Claims 1 to 12 for decanting or separating liquid phases or suspensions of different densities, in particular for liquid extraction.

**Revendications**

1. Dispositif de transport de liquides, notamment des substrats en cours de transformation biologique, dans lequel des disques (5) sont agencés transversalement à l'axe de rotation, dans un tube (1) coaxial et disposé sensiblement à l'horizontale, en pouvant tourner avec lui ou séparément autour d'un axe (2) parallèle à la surface (9) du bain de liquide ou incliné par rapport à celle-ci, les surfaces des disques formant, dans au moins un plan de coupe renfermant l'axe (2), un angle alternativement supérieur et inférieur à 90° par rapport à cet axe, les disques (5) se raccordant de manière étanche sur leur périphérie sur le tube (1), au moins une ouverture de passage (6) pour le liquide, agencée à proximité de la périphérie, étant prévue sur chaque disque (5), cette ouverture de passage étant décalée en direction périphérique, d'un disque suivant en direction axiale par rapport au disque précédent, chaque disque (5) portant en plus de (ou des) l'ouverture(s) de passage (6) agencée(s) à proximité de la périphérie des disques, des ouvertures de passages (6, 12) situées à proximité de l'axe et sur le côté opposé par rapport à l'axe de rotation.

2. Dispositif selon la revendication 1, caractérisé en ce que les ouvertures de passage (6, 12) de disques (5) voisins en direction axiale, sont situées, en projection axiale, sur des côtés opposés des disques.

3. Dispositif selon la revendication 1 ou 2, caractérisé en ce que les disques (5) présentent une forme globale sensiblement elliptique, les ouvertures de passage (6, 12) étant agencées symétriquement par rapport au grand axe, et de préférence sur le grand axe.

4. Dispositif selon la revendication 1, 2 ou 3, caractérisé en ce que les ouvertures de passage (6) de disques voisins (5), sont agencées symétriquement par rapport au centre, en projection axiale.

5. Dispositif selon l'une des revendications 1 à 4, caractérisé en ce que les ouvertures de passage agencées à proximité de l'axe, sont réalisées sous la forme de trous oblongs (12).

6. Dispositif selon l'une des revendications 1 à 5, caractérisé en ce que les ouvertures de passage (6) agencées à proximité de la périphérie des disques, sont réalisées sous la forme de secteurs symétriques au grand axe de l'ellipse.

7. Dispositif selon l'une des revendications 1 à 6, caractérisé en ce que dans le tube (1) est agencé un joint d'étanchéité (14) en forme de disque annulaire, fixe en position, dont la largeur en direction radiale est supérieure à la largeur correspondante de l'ouverture de passage (6) sur la périphérie des disques rotatifs (5), et en ce que le joint d'étanchéité en forme de disque annulaire (14) présente au moins une ouverture traversante (15), qui, lors de la rotation des disques, est alignée de manière cyclique avec l'ouverture de passage (6) sur la périphérie des disques.

8. Dispositif selon l'une des revendications 1 à 6, caractérisé en ce que les disques (5) sont liés de manière rigide au tube (1) par leur périphérie, le tube (1) étant monté à rotation et susceptible d'être entraîné en rotation.

9. Dispositif selon l'une des revendications 1 à 8, caractérisé en ce que des ouvertures d'entrée et de sortie sont prévues sur les deux faces frontales du tube (1), à proximité de l'enveloppe intérieure du tube.

10. Dispositif selon l'une des revendications 1 à 9, caractérisé en ce que le tube (1) est conçu de façon à pouvoir être fermé de manière étanche aux gaz et de préférence résistant aux pressions.

11. Dispositif selon l'une des revendications 1 à 10, caractérisé en ce que le niveau de remplissage du tube est limité à 50% de la section de passage libre de celui-ci.

12. Dispositif selon l'une des revendications 1 à 11, caractérisé en ce que entre les disques (5), sont prévus des éléments rapportés ou analogues destinés à favoriser la coagulation ou à augmenter les surfaces de contact des phases à séparer.

13. Application d'un dispositif selon l'une des revendications 1 à 12, pour séparer de la mousse ou des boues flottantes d'une phase liquide.

14. Application d'un dispositif selon l'une des revendications 1 à 12, pour la décantation ou la séparation de phases liquides ou de suspensions de densités différentes, et notamment pour l'extraction liquide-liquide.

EP 0 199 709 B1

FIG. 1

FIG. 2

FIG. 3

FIG. 4